# EUROPÄISCHE PATENTANMELDUNG

(11) **EP 1 443 677 A1**
(43) Veröffentlichungstag der Anmeldung: **04.08.2004**
(21) Anmeldenummer: 04000557.1
(22) Anmeldetag: 13.01.2004
(51) Int. Cl.: H04B 5/00, H05K 9/00

(54) **Elektrisches Gerät**

(30) Priorität: 29.01.2003 DE 10303456
(71) Anmelder: Fujitsu Siemens Computers GmbH, 80807 München (DE)
(72) Erfinder: Braun, Markus, 86754 Munningen (DE)
(74) Vertreter: Epping Hermann & Fischer

(57) **Zusammenfassung**

Die Erfindung betrifft ein elektrisches Gerät mit einem Gehäuse (1) und einer im Bereich einer Gehäusewand (2) angeordneten Signalübertragungsvorrichtung (3) zur Übertragung eines Signals zwischen dem Gehäuseinnern und der Außenseite des Gehäuses. Erfindungsgemäß ist das elektrische Gerät dadurch gekennzeichnet, daß die Signalübertragungsvorrichtung (3) eine erste innerhalb des Gehäuses (1) angeordnete Komponente (4) und eine zweite außerhalb des Gehäuses (1) angeordnete Komponente (5) aufweist, zwischen denen sich ein schirmender Abschnitt (6) erstreckt, wobei die erste und die zweite Komponente jeweils eine Spule (7, 8) aufweisen und die beiden Spulen (7, 8) einen induktiven Übertrager bilden.

## Beschreibung

Die Erfindung betrifft ein elektrisches Gerät mit einem Gehäuse und einer im Bereich einer Gehäusewand angeordneten Signalübertragungsvorrichtung zur Übertragung eines Signals zwischen dem Gehäuseinnern und der Außenseite des Gehäuses.

Elektrische Geräte sind in dieser Weise ausgestaltet, wenn eine Kommunikation mit anderen Geräten hergestellt werden soll oder externe Komponenten an das elektrische Gerät angeschlossen werden sollen.

Es ist bekannt, zu diesem Zweck Bohrungen oder Durchbrüche in der Gehäusewand vorzusehen und ein Kabel nach außen zu führen. Dies kann auch in der Weise geschehen, daß eine elektrische Steckvorrichtung vorgesehen wird, an die ein Kabel angeschlossen werden kann.

Es ist auch bekannt, eine kontaktlose Schnittstelle bereitzustellen, wobei auf der Außenseite des Gehäuses eine Sendevorrichtung angeordnet ist. Dies ist beispielsweise bei Infrarotschnittstellen oder bei Bluetooth-Schnittstellen der Fall. Auch in diesem Fall sind Durchbrüche in der Gehäusewand vorgesehen, durch die die Sendevorrichtungen versorgt werden.

Das Herausführen von elektrischen Signalen mittels den beschriebenen Durchgangsbuchsen oder Steckern ist bei der Herstellung des Gerätes problematisch, da die Montage der Kabel, der Stecker oder der Buchsen zeitaufwendig und fehlerträchtig ist. Insbesondere bei Geräten, die intern mit hohen Frequenzen arbeiten oder empfindlich für hohe Frequenzen sind, ist das Gehäuse in der Regel so ausgeführt, daß es eine Schirmung gegen elektromagnetische Felder bietet. Zur Erzielung einer guten Schirmwirkung ist es dabei wichtig, daß in dem Gehäuse keine Öffnungen vorhanden sind, da diese die Schirmwirkung erheblich verschlechtern. Das Vorsehen von Durchbrüchen zur Herausführung Signalen stellt somit eine Maßnahme dar, die zwar die Übertragung von Signalen zur Außenseite ermöglicht, gleichzeitig aber die elektrischen Eigenschaften bezüglich der elektromagnetischen Verträglichkeit verschlechtert. Neben einer Verschlechterung der Hochfrequenzdichtigkeit tritt auch eine Verschlechterung des Schutzes vor elektrostatischen Entladungen ein. Daneben verschlechtern sich auch die mechanische Festigkeit des Gehäuses.

Aufgabe der Erfindung ist es, ein elektrisches Gerät mit einer Signalübertragungsvorrichtung anzugeben, bei dem eine Herausführung eines elektrischen Signals bzw. das Hineinführen eines elektrischen Signals ermöglicht ist und gleichzeitig die mechanische Festigkeit und der Schutz gegenüber elektromagnetischer Strahlung erhalten bleibt.

Diese Aufgabe wird gemäß der Erfindung durch ein elektrisches Gerät der eingangs genannten Art gelöst, das dadurch gekennzeichnet ist, daß die Signalübertragungsvorrichtung eine erste innerhalb des Gehäuses angeordnete Komponente und eine zweite außerhalb des Gehäuses angeordnete Komponente aufweist, zwischen denen sich ein schirmender Abschnitt erstreckt, wobei die erste und die zweite Komponente jeweils eine Spule aufweisen und die beiden Spulen einen induktiven Übertrager bilden.

Durch die erfindungsgemäße Ausgestaltung mit einer Signalübertragungsvorrichtung, die einen induktiven Übertrager und einen dazwischenliegenden schirmenden Abschnitt besitzt, ist eine kontaktlose Übertragung eines Signales zwischen der Innen- und der Außenseite des Gehäuses ermöglicht, ohne daß dadurch die schirmenden Eigenschaften des Gehäuses beeinträchtigt werden.

In einer ersten vorteilhaften Ausführung wird der schirmende Abschnitt durch einen Teil der Gehäusewand gebildet, so daß weder ein Durchbruch vorgesehen werden muß, der zu einer Verschlechterung der mechanischen Eigenschaften des Gehäuses führt, noch eine aufwendige Montage von Kabeln, Steckern oder Buchsen vorgesehen werden muß.

In einer zweiten vorteilhaften Ausführung wird der schirmende Abschnitt durch ein in einen Durchbruch in der Gehäusewand eingesetztes Abdeckteil, zum Beispiel einen Deckel bereitgestellt. Dadurch ist eine Optimierung der lokalen Materialeigenschaften ermöglicht, so daß im Bereich der Signalübertragungsvorrichtung ein zur Übertragung des Signals besonders geeignetes Material verwendet werden kann, während das übrige Gehäuse mechanisch und in der Schirmwirkung optimierte Materialien zum Einsatz kommen.

In einer dritten vorteilhaften Ausführung wird der schirmende Abschnitt durch eine Trennwand gebildet, der in einer eine Einheit bildenden Signalübertragungsvorrichtung angeordnet ist und somit eine elektromagnetische Schließung eines Durchbruchs in der Gehäusewand bewirkt, durch den sich die Signalübertragungsvorrichtung erstreckt.

Weitere vorteilhafte Ausgestaltungen der Erfindung sind in den Unteransprüchen angegeben.

Die Erfindung wird nachfolgend anhand von Ausführungsbeispielen näher erläutert. Es zeigt:
- Figur 1: ein erstes Ausführungsbeispiel eines erfindungsgemäßen elektrischen Gerätes mit durchgehender Gehäusewand,
- Figur 2: ein zweites Ausführungsbeispiel eines erfindungsgemäßen elektrischen Gerätes mit einem eingesetzten Deckel und
- Figur 3: ein drittes Ausführungsbeispiel eines erfindungsgemäßen elektrischen Gerätes mit einer eine Trennwand aufweisenden Signalübertragungsvorrichtung.

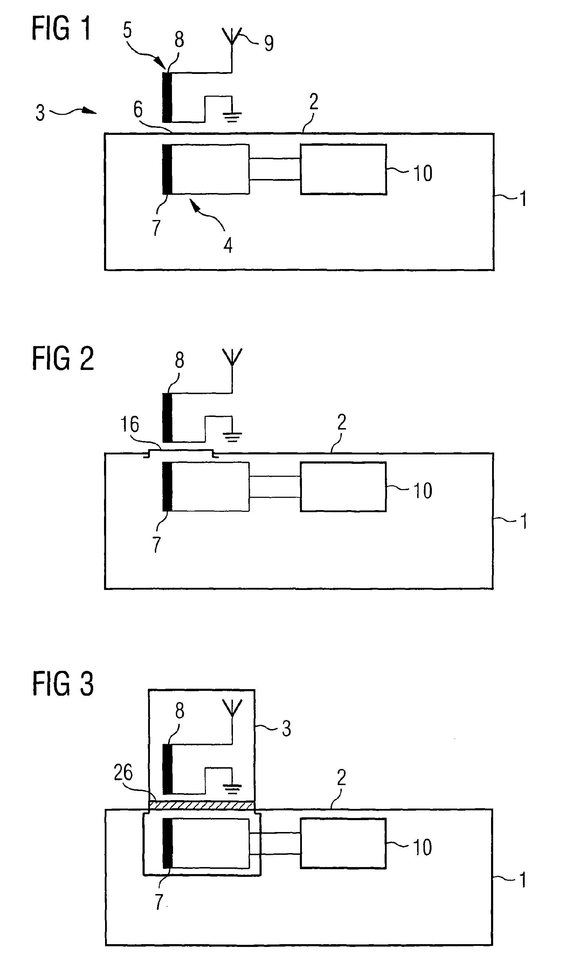

Die in der Figur 1 dargestellte schematische Darstellung eines elektrischen Gerätes zeigt in einem Gehäuse 1 eine erste Komponente 4 einer Signalübertragungsvorrichtung 3. Ein in einer elektrischen Komponente 10 erzeugtes Signal wird auf eine Spule 7 gegeben. In Abhängigkeit des durch die Spule 7 fließenden Stromes wird ein magnetisches Feld erzeugt. Außerhalb des Gehäuses 1 ist ebenfalls eine Spule 8 vorgesehen, die in dem gezeigten Ausführungsbeispiel mit einer Antenne 9 verbunden ist. Die zweite Spule 8 ist Teil einer zweiten Komponente 5 der Signalübertragungsvorrichtung 3. Durch das in der ersten Spule 7 erzeugte magnetische Feld wird in der zweiten Spule 8 eine elektrische Spannung induziert. Die induzierte Spannung in der zweiten Spule 8 ist proportional zu der an der ersten Spule 7 anliegenden Spannung.

Zwischen den beiden Spulen 7 und 8 erstreckt sich ein Abschnitt 6 einer Gehäusewand 2 des Gehäuses 1. Das Material der Gehäusewand 2 bzw. des Abschnitts 6 der Gehäusewand 2 ist so gewählt, daß einerseits die Anforderung bezüglich der elektromagnetischen Verträglichkeit des Gerätes erfüllt sind, andererseits aber die Schirmwirkung nicht zu stark ist, um die Übertragung eines Signals von der ersten Spule 7 zur zweiten Spule 8 über ein magnetisches Feld zu bewerkstelligen. Um einen guten Wirkungsgrad des Übertragers 7 und 8 zu erreichen, sollte die Permeabilitätszahl µᵣ des Materials des schirmenden Abschnitts 6 nicht zu groß sein, da durch das ständige Ummagnetisieren ferroelektrischer Teilchen zu viel Energie verloren gehen würde.

Im Inneren des Gehäuses 1 ist eine signalerzeugende Komponente 10 vorgesehen, die die Spule 7 speist. Wie und wodurch das Signal erzeugt wird, spielt für die Erfindung jedoch keine wesentliche Rolle, daher ist die Ansteuerschaltung für die Spule 7 nicht näher dargestellt. Die zweite Komponente 5 der Signalübertragungsvorrichtung ist mit einer Antenne 9 ausgestattet, über die das von der Spule 7 zur Spule 8 übertragene Signal abgestrahlt werden kann. Stattdessen ist jedoch auch ein elektrischer Anschluß denkbar. Die Prinzipschaltung von Figur 1 läßt darüber hinaus offen, ob und in welcher Weise weitere Schaltungskomponenten in der zweiten Komponente 5 vorgesehen sind.

Bisher wurde die Übertragung eines Signal aus dem Gehäuseinneren zu dem Gehäuseäußeren beschrieben. Auf die gleiche Weise ist es selbstverständlich möglich, ein von der Antenne 9 empfangenes Signal in das Innere des Gehäuses 1 zu übertragen. Dabei ist jedoch unter Umständen ein Verstärker vorzusehen, der das von der Antenne 9 empfangene Signal verstärkt und das verstärkte Empfangssignal zur Speisung der Spule 8 verwendet wird.

In der Figur 2 ist ein zweites Ausführungsbeispiel eines erfindungsgemäßen elektrischen Gerätes gezeigt. Die Gehäusewand 2 des Gehäuses 1 ist nicht durchgehend, sondern ist mit einem Durchbruch versehen. In den Durchbruch ist ein Schirmeigenschaften aufweisender Deckel 16 eingesetzt. Während das Gehäuse 1 und die Gehäusewand 2 aus einem Material gefertigt sind, das besonders gute schirmende Eigenschaften aufweist, ist der Deckel 16 durch das verwendete Material so abgestimmt, daß ein verbesserter Wirkungsgrad des Übertragers 7 und 8 erreicht wird. Da es sich nur um einen kleinen Abschnitt des Gehäuses 1 handelt, der durch den Deckel 16 abgedeckt ist, können schlechtere Eigenschaften bezüglich der elektromagnetischen Verträglichkeit in Kauf genommen werden.

In der Figur 3 ist ein drittes Ausführungsbeispiel dargestellt, bei dem ebenfalls ein Durchbruch in der Gehäusewand 2 vorgesehen ist. Durch diesen Durchbruch erstreckt sich eine Signalübertragungsvorrichtung 3, die als einstückige Komponente ausgebildet ist und sich im dargestellten Ausführungsbeispiel von Innen her durch den Durchbruch in der Gehäusewand 2 erstreckt. Im Innern der Signalübertragungsvorrichtung 3 ist eine Trennwand 26 vorgesehen, die eine Fortsetzung der Gehäusewand 2 darstellt, d.h. die hochfrequenztechnische Schließung des Durchbruchs bewirkt. Im Ausführungsbeispiel von Figur 3 liegt die Trennwand 26 in derselben Ebene wie die Gehäusewand, dies ist jedoch nicht erforderlich, die Trennwand könnte zum Beispiel auch wannenförmig ausgestaltet sein.

Zur Verbesserung der Signalübertragungsvorrichtung 3 der beschriebenen drei Ausführungsbeispiele kann eine Schirmung im Innern des Gehäuses 2 vorgesehen werden, um das Signal, das kontaktlos vom Gehäuseinnern zum Gehäuseäußern übertragen wird, gegenüber anderen Schaltungskomponenten des elektrischen Gerätes abzuschirmen. Je nach gewählter Arbeitsfrequenz des Übertragers ist dies jedoch nicht erforderlich.

### Bezugszeichenliste

- 1: Gehäuse
- 2: Gehäusewand
- 3: Signalübertragungsvorrichtung
- 4: erste Komponente
- 5: zweite Komponente
- 6: schirmender Abschnitt
- 9: Antenne
- 10: signalerzeugende Komponente
- 16: Deckel
- 26: Trennwand

## Patentansprüche

1. Elektrisches Gerät mit
- einem Gehäuse (1) und
- einer im Bereich einer Gehäusewand (2) angeordneten Signalübertragungsvorrichtung (3) zur Übertragung eines Signals zwischen dem Gehäuseinnern und der Außenseite des Gehäuses,
**dadurch gekennzeichnet, daß**
die Signalübertragungsvorrichtung (3) eine erste innerhalb des Gehäuses (1) angeordnete Komponente (4) und eine zweite außerhalb des Gehäuses (1) angeordnete Komponente (5) aufweist, zwischen denen sich ein schirmender Abschnitt (6) erstreckt, wobei die erste und die zweite Komponente jeweils eine Spule (7, 8) aufweisen und die beiden Spulen (7, 8) einen induktiven Übertrager bilden.

2. Elektrisches Gerät nach Anspruch 1,
**dadurch gekennzeichnet, daß**
der schirmende Abschnitt (6) ein Teil der Gehäusewand (2) ist.

3. Elektrisches Gerät nach Anspruch 1,
**dadurch gekennzeichnet, daß**
der schirmende Abschnitt durch ein in einen Durchbruch des Gehäuses (1) eingesetztes Abdeckteil (16) mit schirmenden Eigenschaften gebildet ist.

4. Elektrisches Gerät nach Anspruch 1,
**dadurch gekennzeichnet, daß**
der schirmende Abschnitt durch eine Trennwand (26) mit schirmenden Eigenschaften in einer sich durch einen Durchbruch in der Gehäusewand (2) erstreckenden Signalübertragungsvorrichtung (3) gebildet ist.

5. Elektrisches Gerät nach einem der Ansprüche 1 bis 4,
**dadurch gekennzeichnet, daß**
der schirmende Abschnitt (6; 16; 26) elektrisch leitfähig ist.

6. Elektrisches Gerät nach einem der Ansprüche 1 bis 5,
**dadurch gekennzeichnet, daß**
der schirmende Abschnitt (6; 16; 26) eine Permeabilitätszahl von µᵣ ≈ 1 aufweist.

7. Elektrisches Gerät nach einem der Ansprüche 1 bis 6,
**dadurch gekennzeichnet, daß**
die zweite Komponente (5) eine Antenne (9) aufweist zur Abstrahlung und/oder zum Empfang eines Signals zu bzw. von einem Kommunikationspartner.
